# EUROPEAN PATENT APPLICATION

(11) **EP 3 903 636 A1**
(43) Date of publication of application: **03.11.2021**
(21) Application number: 19901511.6
(22) Date of filing: 28.11.2019
(51) Int. Cl.: A47B 31/00, A47B 1/04, A47B 13/08, A47B 95/04, A47B 95/02, A47B 13/00, B60B 33/00

(54) **MOVABLE INTEGRATED TABLE**

(30) Priority: 26.12.2018 KR 20180006089 U
(71) Applicant: Kim, Bu Seong, Gimhae-si, Gyeongsangnam-do 50822 (KR)
(72) Inventor: Kim, Bu Seong, Gimhae-si, Gyeongsangnam-do 50822 (KR)
(74) Representative: M. Zardi & Co S.A.
(86) International application number: PCT/KR2019/016647
(87) International publication number: WO 2020/138741

(57) **Abstract**

The present invention relates to a movable integrated table that can be easily moved to a destination in a state where various items are placed thereon or to allow various items to be placed thereon, and more particularly to a movable integrated table that provides improved decorativeness and is convenient to move such that it can transfer items such as beverages, foods, computers, business items, and business materials to various tables such as various desks or dining tables for the purpose of use, or such that it enables various items to be placed thereon or to be stably transferred in a state where they are placed thereon even within a relatively narrow space in a department store, a shop, an outdoor party hall, a home, a hotel, an office, an indoor/outdoor banquet hall, or a high-class restaurant.

## Description

### Technical Field

The present invention relates to a movable integrated table that can be easily moved to a destination in a state where various items are placed thereon or to allow various items to be placed thereon, and more particularly to a movable integrated table that provides improved decorativeness and is convenient to move such that it can transfer items such as beverages, foods, computers, business items, and business materials to various tables such as various desks or dining tables for the purpose of use, or such that it enables various items to be placed thereon or to be stably transferred in a state where they are placed thereon even within a relatively narrow space in a department store, a shop, an outdoor party hall, a home, a hotel, an office, an indoor/outdoor banquet hall, or a high-class restaurant.

### Background Art

Currently, the reality is that the number of household members is rapidly changing into one or two and residential space is also changing into a narrow area. In general, office desks and conference tables are fabricated to be used only for sitting situations and living tables and dining tables are not easy to move due to their volume or weight, so these tables have a problem in that they cannot be easily moved with various items on them.

Meanwhile, since conventional tables (trays) are fixed or formed to be relatively large, it is necessary for a user to carry and move various items such as business documents, beverages, or foods using a tray. They have problems in that it takes a lot of time and hassle to carry and move such items, considerable labor is required depending on the distance, and various items, such as business documents, placed on the tray fall during a movement process.

### Disclosure

### Technical Problem

Therefore, the present invention has been proposed to overcome the problems of the conventional art, and an object of the present invention is to provide a movable table that can be freely and conveniently moved even in a relatively narrow space while preventing the separation of various items placed on an upper plate and provides improved decorativeness by taking into consideration a rapidly changing social structure (one/two-person family) and interest in well-being and nature, eliminating the possibility of sexual harassment attributable to joint work between a man and a woman in advance, and reflecting the various needs of consumers.

In particular, an object of the present invention is to provide a movable integrated table that provides improved decorativeness and is convenient to move such that it can transfer items such as beverages, foods, computers, business items, and business materials to various tables such as various desks or dining tables for the purpose of use, or such that it enables various items to be placed thereon or to be stably transferred in a state where they are placed thereon even within a relatively narrow space in a department store, a shop, an outdoor party hall, a home, a hotel, an office, an indoor/outdoor banquet hall, or a high-class restaurant.

### Technical Solution

The present invention according to an embodiment for accomplishing the above objects provides a movable integrated table including: an upper plate configured such that various items can be placed thereon; a lower plate installed below the upper plate in alignment with the upper plate, and configured to accommodate various items; a plurality of posts configured to space the upper and lower plates apart from each other and support them; a pair of folding plates coupled to both side ends of the upper plate in one direction by hinge members, and configured to be foldable downward; a stopper support fixed to the bottom of the upper plate to traverse the upper plate in one direction; a pair of stoppers slidably installed into the stopper support to face each other, and configured to selectively protrude and retract in one direction of the upper plate and support the bottoms of the pair of folding plates; front wheels installed on the front side of the bottom of the lower plate; and rear wheels installed on the rear side of the bottom of the lower plate.

Preferably, a first separation prevention protrusion may be formed to protrude upward along the circumferences of the remaining portions of the upper plate, other than the portions of the upper plate to which the pair of folding plates are coupled, so that various items placed on the top surface of the upper plate are prevented from being separated and falling from the upper plate; a second separation prevention protrusion may be formed to protrude upward along the circumference of the lower plate, so that various items placed on the top surface of the lower plate are prevented from being separated and falling from the lower plate; and a third separation prevention protrusion may be formed to protrude upward along the circumferences of the remaining portions of each of the pair of folding plates, other than the portion of each of the pair of folding plates to which the upper plate is coupled, so that various items placed on the top surfaces of the pair of folding plates are prevented from being separated and falling from the pair of folding plates.

Preferably, various decorations may be formed on each of the first to third separation prevention protrusions by a printing, engraving, or perforating method.

Preferably, a grip may be provided on one side of the upper plate, and at least one container storage member for storing various containers may be installed on the lower plate.

Preferably, the stopper support may be composed of a flange which has a 'U' shaped cross section and both upper ends of which are bent outward, and may be fastened to the bottom of the upper plate through fastening members passing through and engaging with fastening holes formed in the flange; and the pair of stoppers may be slidably coupled along the groove of the stopper support in a longitudinal direction, and a handle bent downward may be formed at the outer end of each of the pair of stoppers and the stopper may be slid by pushing or pulling the stopper to and from the stopper support while holding the stopper using the handle.

### Advantageous Effects

As described above, according to the present invention, the following effects can be obtained.

First, the present invention is configured such that the pair of folding plates that are foldable through the hinge members and maintained in an unfolded state by the pair of stoppers are installed at both side ends of the upper plate on which various items, e.g., various business documents or items, are placed, so that the area of the upper plate can be expanded, with the result that various items including a large quantity of business documents, beverages or foods can be accommodated on the table.

Second, the present invention is configured such that the pair of folding plates installed at both ends of the upper plate are installed to be foldable downward by the pair of stoppers, so that the table can be conveniently moved without a spatial limitation in a state where various items are stably placed thereon even in a narrow interior or a narrow entrance.

Third, the present invention is configured such that sufficient storage space is secured on the upper and lower plates where various items, i.e., business documents or foods, are accommodated and the separation prevention protrusions are formed along the circumferences of the upper and lower plates and the folding plates, thereby preventing the separation of various business documents and foods, and is also configured such that various decorations are provided, thereby improving decorativeness.

Eventually, in the current era where well-being is important, work efficiency is improved by standing up rather than sitting, elegant presentation is expected as a symbol of free discussion and more freedom is provided without damaging the next panelist in various forums, height adjustment is not only adjustable but it is also made sturdy, it is semi-permanent without a large compulsory impact, and it can be widely used as it adds luxury.

### Description of Drawings

FIG. 1 is a diagram illustrating a movable integrated table according to an embodiment of the present invention;
FIG. 2 is an exploded view showing the movable integrated table shown in FIG. 1;
FIG. 3 is a view showing a cross-section of an upper plate taken along line A-A' shown in FIG. 1;
FIGS. 4 and 5 are views illustrating a process in which a pair of folding plates are unfolded or folded according to the present invention;
FIG. 6 is a view showing a movable integrated table manufactured based on a movable integrated table according to an embodiment of the present invention; and
FIG. 7 is a view showing a state where the pair of folding plates shown in FIG. 6 have been folded.

### Mode for Invention

The advantages and features of the present invention and methods for achieving them will be apparent with reference to the embodiments to be described later in detail together with the accompanying drawings. However, the present invention is not limited to the embodiments disclosed below, but may be implemented in a variety of different forms.

In the present specification, the embodiments are provided to complete the disclosure of the present invention and to fully convey the scope of the invention to those of ordinary skill in the art to which the present invention pertains. Furthermore, the invention is only defined by the scope of the claims. Accordingly, in some embodiments, well-known components, well-known operations, and well-known techniques have not been described in detail in order to avoid making the interpretation of the present invention obscure.

Furthermore, the same reference numerals refer to the same components throughout the specification. Additionally, the terms used (referred to) herein are intended to describe embodiments, and are not intended to limit the present invention. In the present specification, a singular form also includes a plural form unless specifically stated in a corresponding passage. Furthermore, the components and operations referred to in conjunction with "including (or having)" do not exclude the presence or addition of one or more other components and operations.

Unless otherwise defined, all terms (including technical and scientific terms) used herein may be used as having meanings that can be commonly understood by those of ordinary skill in the art to which the present invention pertains. Furthermore, terms defined in commonly used dictionaries are not interpreted ideally or excessively unless defined.

The technical features of the present invention will be described in detail below with reference to the accompanying drawings.

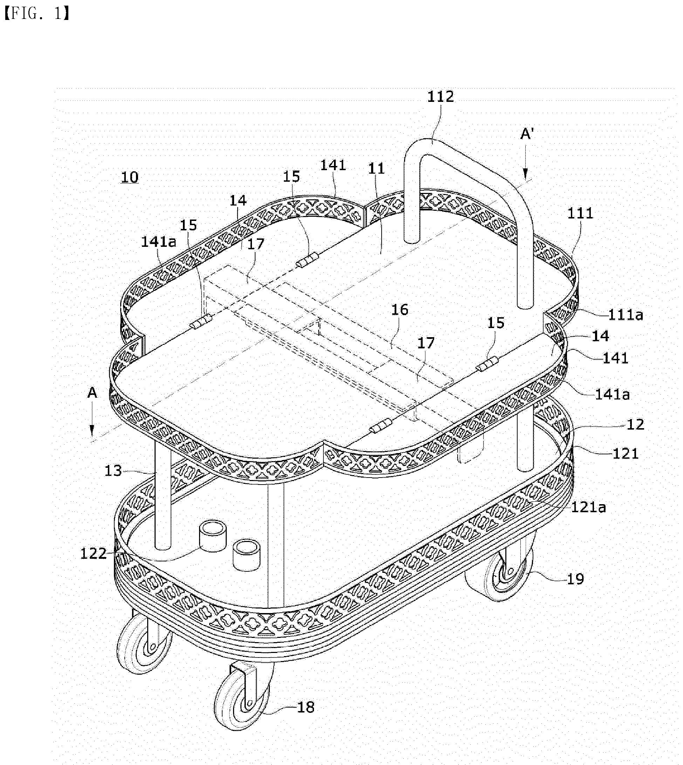

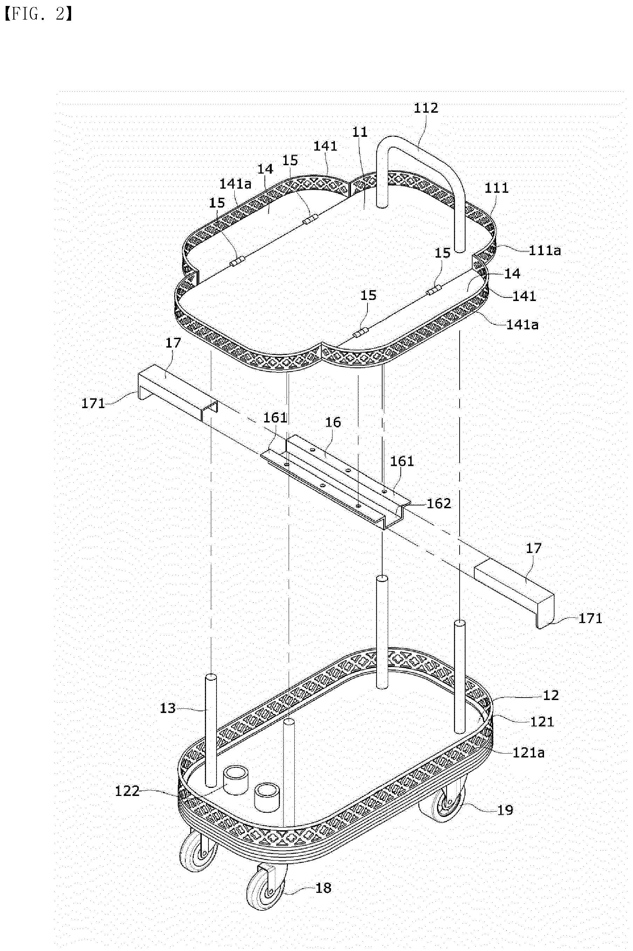

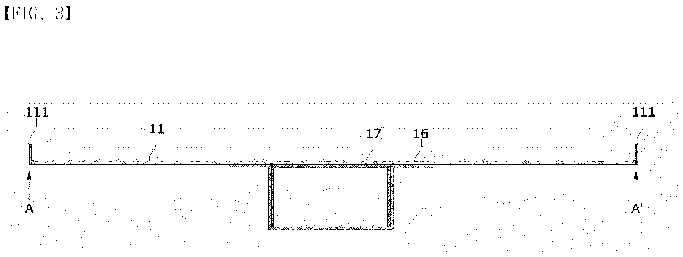

FIG. 1 is a diagram illustrating a movable integrated table according to an embodiment of the present invention, FIG. 2 is an exploded view showing the movable integrated table shown in FIG. 1, and FIG. 3 is a view showing a cross-section of an upper plate taken along line A-A' shown in FIG. 1.

Referring to FIGS. 1 to 3, the movable integrated table 10 according to the embodiment of the present invention includes an upper plate 11 configured such that various items, e.g., various business documents, various members (laptops, PCs, various documents, reference materials, samples, etc.) required for business processing, beverages or foods, and various members (cups, etc.) required for the intake of the beverages and foods, are placed thereon.

As shown in FIG. 2, the upper plate 11 has a flat plane structure having a flat top surface so that various items placed on the top surface do not slip or fall.

In this case, the shape of the upper plate 11, i.e., the shape of the frame, is not limited. For example, it may have a circular shape, a polygonal shape, an oval shape, or a shape having a plurality of curved surfaces.

A first separation prevention protrusion 111 is formed along the circumferences of the remaining portions of the upper plate 11 other than both side portions (both side portions to which a pair of folding plates 14 are coupled) thereof in one direction, i.e., in the widthwise direction, and protrudes upward to a predetermined height. Through this, various items placed on the top surface of the upper plate 11 are prevented from being separated and falling from the outside of the upper plate 11.

The first separation prevention protrusion 111 is composed of a thin plate, preferably a metal plate, more preferably a brass plate in order to improve aesthetics and decorativeness. In order to improve decorativeness, various decorations 111a are formed on the side of the first separation prevention protrusion 111 by a printing, engraving, or perforation method. In this case, such a decoration 111a may be implemented as any one of a sign, a pattern, a shape, a figure, and a character.

Furthermore, a handle 112 is installed on one side of the top surface of the upper plate 11 to push and move the movable integrated table 10. In this case, the handle 112 may be formed, e.g., in an 'inverted U,' 'sideways U,' or '-' shape.

However, the handle 112 of the present invention is not limited to an 'inverted U,' 'sideways U,' or '-' shape, but may be formed in various structures. Furthermore, a grip part made of wood or synthetic resin may be further provided in the middle of the handle 112 in order to provide a grip feeling and a design of painting.

As shown in FIGS. 1 and 2, the movable integrated table 10 according to the embodiment of the present invention includes a lower plate 12 installed in parallel with the upper plate 11 in a horizontal direction under the upper plate 11 and configured such that various items are accommodated thereon like the upper plate 11.

The lower plate 12 is fixed below the upper plate 11 through a plurality of posts, preferably four posts 13. In other words, the bottom side of the upper plate 11 is fixedly supported on the top side of the lower plate 12 through the posts 13.

Like the upper plate 11, the lower plate 12 is formed such that the top surface thereof has a flat planar surface. Furthermore, there is formed a second separation prevention protrusion 121 protruding upward to a predetermined height along the circumference of the lower plate 12 and configured to prevent various items placed on the top surface of the lower plate 12 from being separated and falling from the lower plate 12.

Like the first separation prevention protrusion 111, the second separation prevention protrusion 121 is made of a thin metal plate, preferably a brass plate, in order to improve aesthetics and decorativeness. Like in the first separation prevention protrusion 111, various decorations 121a implemented as any one of a sign, a pattern, a shape, a figure, and a character are formed on the side of the second separation prevention protrusion 121 by a printing, engraving, or perforation method. In this case, such a decoration 121a formed on the second separation prevention protrusion 121 may be formed in the same pattern as the decoration 111a formed on the first separation prevention protrusion 111 in order to provide overall unity.

The lower panel 12 may be provided with one or more container storage members 122 for storing various containers, such as bottled water containers, various alcoholic beverages (wine bottles), writing instruments, and the like. In this case, the container storage members 122 may be composed of a plurality of barrels. In addition, they may be each formed in a circular ring structure.

Meanwhile, the container storage members 122 may each have an inclined structure inclined outward so that a user or a service provider can easily withdraw various containers stored therein. For example, the inclination of the container storage members 122 may be formed to be approximately 10° to 50°.

The posts 13 are installed by fixedly supporting the upper plate 11 with the bottom portion of the upper plate 11 spaced apart from the top portion of the lower plate 12 by a predetermined height, and are adjustable in their height. A total of four posts 13 may be installed, one at each corner. The posts 13 may be each constructed in a circular rod structure as an example.

As shown in FIGS. 1 and 2, the movable integrated table 10 according to the embodiment of the present invention includes the pair of folding plates 14 that are coupled to both side ends of the upper plate 11, e.g., both side ends in one side (widthwise) direction of the upper plate 11, through the hinge members 15 in the form of flaps and are folded downward.

The pair of folding plates 14 are rotatably coupled to both ends of the upper plate 11 through the hinge members 15, and function as expansion plates that expand the area of the upper plate 11 in the widthwise direction. Through this, it is made possible to increase the quantity of various items that can be placed on the top surface of the upper plate 11.

As shown in FIGS. 1 and 2, a third separation prevention protrusion 141 is formed to protrude upward to a predetermined height along the circumferences of the remaining portions of each of the folding plates 14, other than one side portion thereof coupled to the upper plate 11 through the hinge members 15, in order to prevent various items, i.e., alcoholic beverages and snacks, or various members, placed on the top surface from being separated to the outside.

Like the first separation prevention protrusion 111, the third separation prevention protrusion 141 is made of a thin metal plate, preferably a brass plate, in order to improve aesthetics and decorativeness. Like in the first separation prevention protrusion 111, various decorations 141a implemented as any one of a sign, a pattern, a shape, a figure, and a character are formed on the side of the third separation prevention protrusion 141 by a printing, engraving, or perforation method. In this case, such a decoration 141a formed on the third separation prevention protrusion 141 may be formed in the same pattern as the decoration 111a formed on the first separation prevention protrusion 111 in order to provide overall unity.

As shown in FIGS. 1 to 3, the movable integrated table 10 according to the embodiment of the present invention includes a stopper support 16 that is fixedly installed to traverse the bottom of the upper plate 11 in the widthwise direction.

The stopper support 16 is composed of a flange 161 which has a 'U,' 'sideways U,' or '-' shaped cross section, as shown in FIG. 3, and both upper ends of which are bent outward, and is fastened to the bottom of the upper plate 11 through fastening members such as screws (pieces) passing through fastening holes formed in the flange 161.

Furthermore, as shown in FIGS. 1 to 3, the movable integrated table 10 according to the embodiment of the present invention includes a pair of stoppers 17 that are coupled along the stopper support 16 in a sliding manner.

The pair of stoppers 17 are coupled to be slidable along the groove 162 of the stopper support 16 in the longitudinal direction. Through this, the rotation of the pair of folding plates 14 is locked or released.

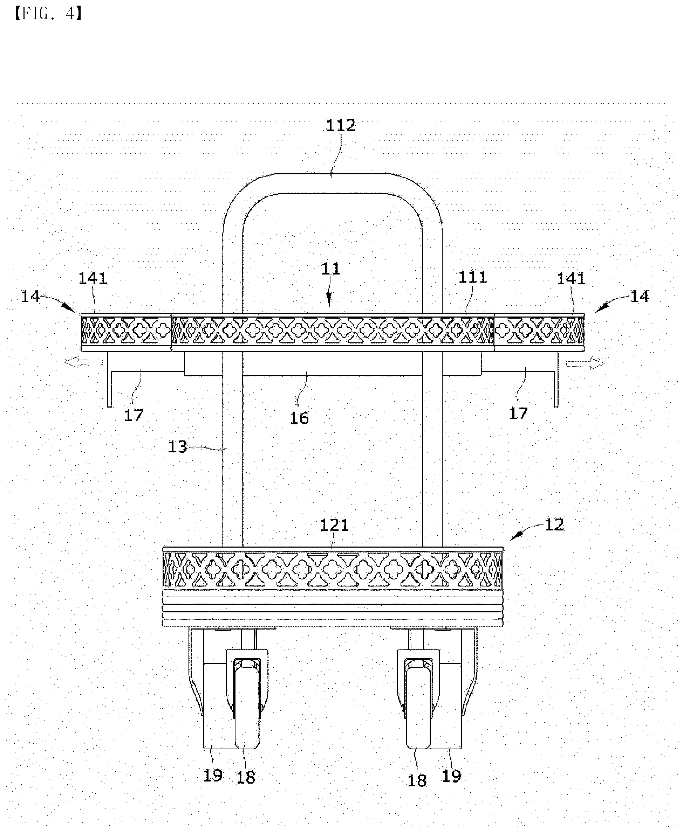

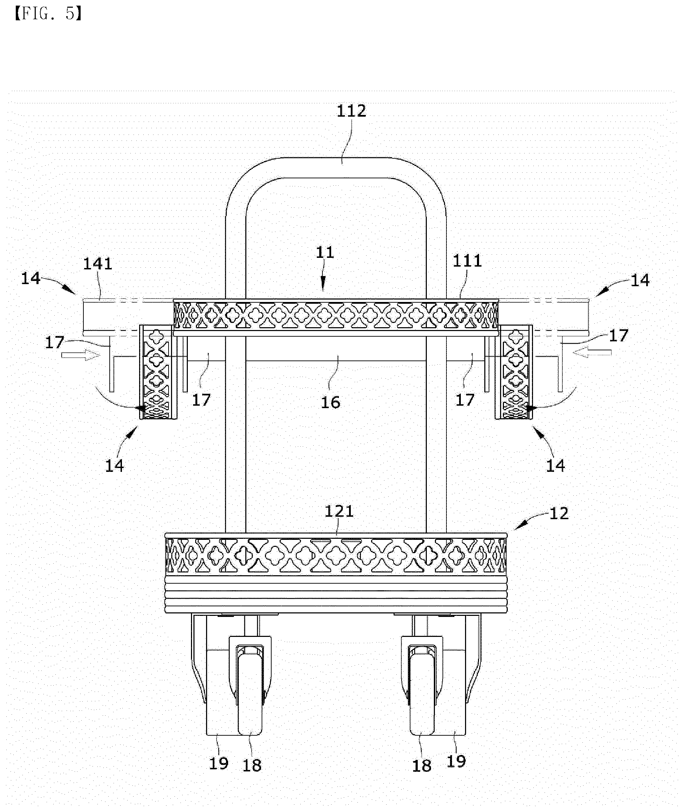

FIGS. 4 and 5 are views illustrating a process in which a pair of folding plates are unfolded or folded according to the present invention. FIG. 4 is a view showing a state in which the pair of folding plates are unfolded, and FIG. 5 is a view showing a state in which the pair of folding plates are folded downward at a right angle.

After the pair of folding plates 14 are unfolded to be horizontally parallel with the upper plate 11, as shown in FIG. 4, the pair of stoppers 17 are drawn out from the stopper support 16 in directions away from each other.

Accordingly, the bottoms of the pair of foldable plates 14 are supported by the pair of stoppers 17 drawn out from the stopper support 16 and maintained in an unfolded state without being folded downward by their own weight, so that the area of the upper plate 11 can be expanded by the size of the pair of folding plates 14.

In the state where the pair of folding plates 14 are unfolded, it is necessary to reduce the expanded area by folding the pair of folding plates 14 downward at a right angle in order to move to a narrow place within a pub. To this end, the expanded area is reduced by sliding the pair of stoppers 17 into the inside of the stopper support 16 and then folding the pair of folding plates 14 downward.

Meanwhile, a handle 171 bent downward is formed at an outer end of each of the pair of stoppers 17. A user can slide the stopper 17 by pushing or pulling the stopper 17 to and from the stopper support 16 while holding the stopper 17 with a finger by using the handle 171.

As shown in FIGS. 1 and 2, the movable integrated table 10 according to the embodiment of the present invention includes a pair of front wheels 18 and a pair of rear wheels 19 installed on the bottom of the lower plate 12.

The pair of front wheels 18 are formed in forward and backward directions to have a smaller diameter than the pair of rear wheels 19, and are fixed to move only in the forward and backward directions and not to rotate a rotation direction in order to be advantageous when the movable integrated table 10 moves up stairs. It will be apparent that the pair of front wheels 18 may be formed to have a larger diameter than the pair of rear wheels 19. In addition, the pair of rear wheels 19 may be rotated 360° so that they can freely move forward, backward, leftward, and rightward.

Meanwhile, a rubber plate may be further installed on the top surface of each of the upper plate 11 and the lower plate 12 as a slide prevention member so that alcoholic beverages and snacks, or various members placed on the top surface do not slide.

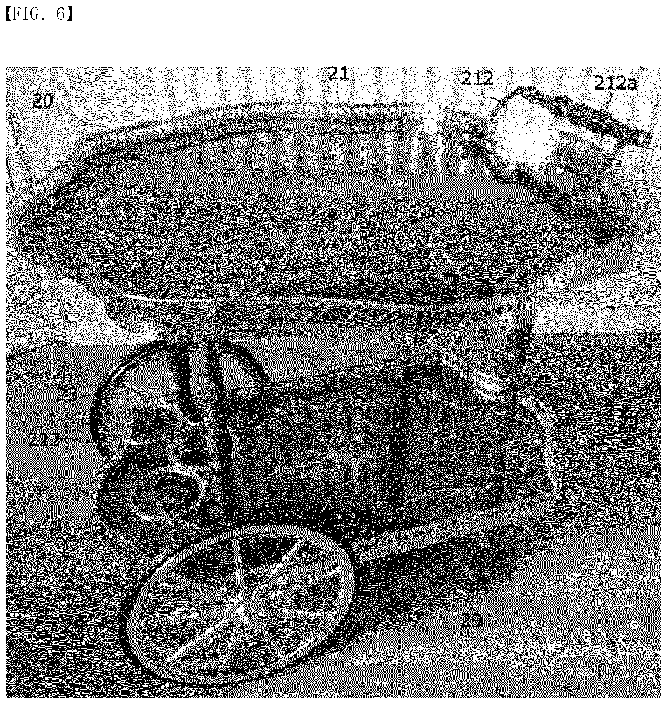

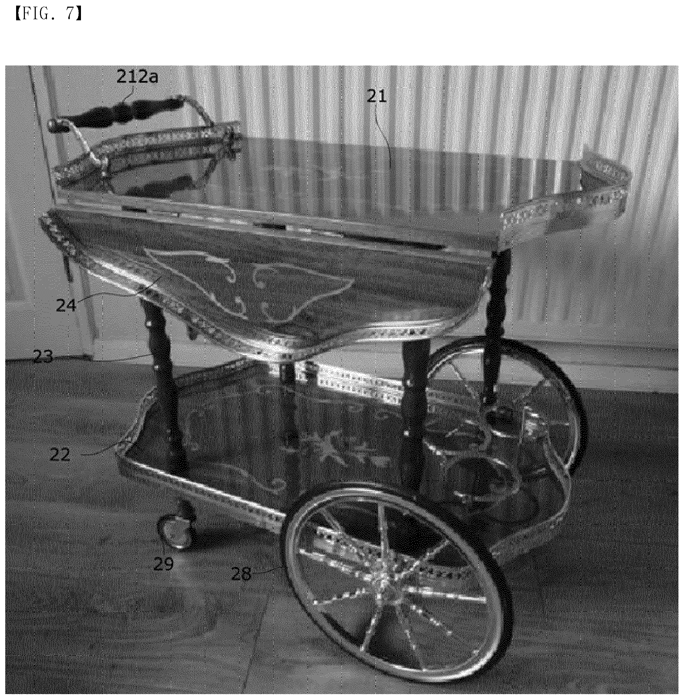

FIG. 6 is a view showing a movable integrated table manufactured based on a movable integrated table according to an embodiment of the present invention, and FIG. 7 is a view showing a state where the pair of folding plates shown in FIG. 6 have been folded.

Referring to FIGS. 6 and 7, the movable integrated table 20 according to the present invention has the same configuration as the movable integrated table 10 shown in FIGS. 1 to 5. In other words, it includes an upper plate 21, a lower plate 22, posts 23, and a pair of folding plates 24. It further includes hinge members for folding and supporting the pair of folding plates 24, a stopper support, and a pair of stoppers.

The upper plate 21 and the lower plate 22 differ from the upper plate 11 and the lower plate 22 shown in FIGS. 1 to 5 in shape and material, but the functions and effects thereof are the same. For example, the upper plate 11 may be formed in a structure in which the edges thereof are connected by a plurality of curved surfaces, and may be made of wood (solid wood, or plywood), a synthetic resin plate, or the like. The design and decoration thereof may be improved by engraving various patterns and then performing painting on the surface.

Meanwhile, the luxury and elegance of the pair of front wheels 28 are improved by painting wheel parts and ribs in gold color. In addition, the pair of front wheels 18 is formed to have a larger diameter than the pair of rear wheels 29, and is fixed to move only in the forward and rearward directions and not to rotate in a rotation direction in order to be advantageous when the movable integrated table 10 moves up stairs. In addition, the pair of rear wheels 29 may be rotated 360° so that the table 20 can freely move forward, rearward, leftward, and rightward.

Meanwhile, the handle 212 may be formed, e.g., in an 'inverted U,' 'sideways U,' or '-' shape. A grip part 212a fabricated into various shapes using a material such as wood or synthetic resin material may be further provided in the middle of the handle 212 in order to improve luxury and elegance while improving a grip feeling.

Furthermore, container storage members 222 may each be formed in a circular ring structure to accommodate various containers, e.g., bottled water containers (bottles) or various bottles. For example, as shown in FIG. 6, the container storage members 222 may have a structure in which three circular rings are connected to each other.

As described above, the technical spirit of the present invention has been described in detail in conjunction with the preferred embodiments, but the preferred embodiments are intended not for limitation but for illustration. Therefore, those of ordinary skill in the art will appreciate that various embodiments may be possible through the combination of the embodiments of the present invention within the scope of the technical spirit of the present invention.

## Claims

1. A movable integrated table comprising:
an upper plate configured such that various items can be placed thereon;
a lower plate installed below the upper plate in alignment with the upper plate, and configured to accommodate various items;
a plurality of posts configured to space the upper and lower plates apart from each other and support them;
a pair of folding plates coupled to both side ends of the upper plate in one direction by hinge members, and configured to be foldable downward;
a stopper support fixed to a bottom of the upper plate to traverse the upper plate in one direction;
a pair of stoppers slidably installed into the stopper support to face each other, and configured to selectively protrude and retract in one direction of the upper plate and support bottoms of the pair of folding plates;
front wheels installed on a front side of a bottom of the lower plate; and
rear wheels installed on a rear side of the bottom of the lower plate.

2. The movable integrated table of claim 1, wherein:
a first separation prevention protrusion is formed to protrude upward along circumferences of remaining portions of the upper plate, other than portions of the upper plate to which the pair of folding plates are coupled, so that various items placed on a top surface of the upper plate are prevented from being separated plate and falling from the upper;
a second separation prevention protrusion is formed to protrude upward along a circumference of the lower plate, so that various items placed on a top surface of the lower plate are prevented from being separated and falling from the lower plate; and
a third separation prevention protrusion is formed to protrude upward along circumferences of remaining portions of each of the pair of folding plates, other than a portion of each of the pair of folding plates to which the upper plate is coupled, so that various items placed on top surfaces of the pair of folding plates are prevented from being separated and falling from the pair of folding plates.

3. The movable integrated table of claim 2, wherein various decorations are formed on each of the first to third separation prevention protrusions by a printing, engraving, or perforating method.

4. The movable integrated table of claim 1, wherein a grip is provided on one side of the upper plate, and at least one container storage member for storing various containers is installed on the lower plate.

5. The movable integrated table of claim 1, wherein:
the stopper support is composed of a flange which has a 'U,' 'sideways U,' or '-' shaped cross section and both upper ends of which are bent outward, and is fastened to the bottom of the upper plate through fastening members passing through and engaging with fastening holes formed in the flange; and
the pair of stoppers are slidably coupled along a groove of the stopper support in a longitudinal direction, and a handle bent downward is formed at an outer end of each of the pair of stoppers and the stopper is slid by pushing or pulling the stopper to and from the stopper support while holding the stopper using the handle.
